**Europäisches Patentamt**

**European Patent Office**

**Office européen des brevets**

(11) Veröffentlichungsnummer : **0 398 054 B1**

(12) **EUROPÄISCHE PATENTSCHRIFT**

(45) Veröffentlichungstag der Patentschrift :
**02.09.92 Patentblatt 92/36**

(51) Int. Cl.⁵ : **B65G 7/12**

(21) Anmeldenummer : **90108038.2**

(22) Anmeldetag : **27.04.90**

(54) **Abnehmbare Tragevorrichtung.**

(30) Priorität : **19.05.89 DE 8906204 U**

(43) Veröffentlichungstag der Anmeldung :
**22.11.90 Patentblatt 90/47**

(45) Bekanntmachung des Hinweises auf die
Patenterteilung :
**02.09.92 Patentblatt 92/36**

(84) Benannte Vertragsstaaten :
**AT CH DE FR GB LI**

(56) Entgegenhaltungen :
**DE-A- 2 401 077**
**DE-A- 3 431 400**
**FR-A- 2 550 426**
**US-A- 4 274 669**
**US-A- 4 746 042**

(73) Patentinhaber : **ITW-ATECO GmbH**
**Stormarnstrasse 43-49**
**W-2000 Norderstedt 1 (DE)**

(72) Erfinder : **Theobald, Thomas**
**Friedenstrasse 25**
**W-7100 Heilbronn-Böckingen (DE)**

(74) Vertreter : **Dipl.-Ing. H. Hauck Dipl.-Ing. E.**
**Graalfs Dipl.-Ing. W. Wehnert Dr.-Ing. W.**
**Döring**
**Neuer Wall 41**
**W-2000 Hamburg 36 (DE)**

EP 0 398 054 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Neuerung bezieht sich auf eine Tragevorrichtung nach dem Oberbegriff des Anspruches 1.

Der Transport von unhandlichen, sperrigen Gegenständen bereitet aus unterschiedlichen Gründen Schwierigkeiten. Ein Problem besteht darin, daß die Oberfläche solcher Gegenstände in der Regel keine oder nur unzureichende Möglichkeiten bietet, sie festzuhalten. Dadurch wird sowohl das Anheben als auch ein Lenken des Gegenstandes während des Transportes erschwert.

Besonders problematisch ist z.B. der Transport von Rahmen, z.B. für Türen oder Fenster im Fertigungsbetrieb, während des Transports und bei der Montage. Je nach verarbeitetem Material und Größe können Rahmen ein beträchtliches Gewicht erreichen. Erschwerend kommt hinzu, daß der Schwerpunkt während des Transportes in der Regel weit über der Stelle liegt, an der der Rahmen gehalten wird. D.h., mindestens eine der tragenden Personen muß den Rahmen in seinem oberen Bereich abstützen, um ein Umkippen zu verhindern. Damit hat diese Person jedoch nur noch eine Hand zum Tragen frei. Dies reicht in der Regel nicht aus, um einen sicheren Halt zu gewährleisten, insbesondere dann, wenn der Rahmen eine glatte Oberfläche aufweist.

Aufgabe der Neuerung ist es daher, eine abnehmbare Tragevorrichtung für unhandliche Gegenstände zu schaffen, die für die Dauer des Transportes mit diesen verbindbar ist und darüber hinaus wieder verwendet werden kann.

Gelöst wird die Aufgabe durch die Merkmale des Kennzeichnungsteiles des Anspruches 1.

Die neuerungsgemäße Tragevorrichtung besteht aus einem Griffabschnitt und einem damit verbundenen Kupplungsabschnitt. In dem Kupplungsabschnitt ist eine längliche Öffnung vorgesehen, die zum Hintergreifen des Kopfes einer mit dem Gegenstand verbundenen Schraube dient.

Das Funktionsprinzip der neuerungsgemäßen Tragevorrichtung ist sehr einfach. Voraussetzung ist, daß eine Schraube so an dem zu transportierenden Gegenstand befestigt ist, daß ihr Kopf etwas übersteht. Über diesem Schraubenkopf wird der Kupplungsabschnitt geführt, wobei seine Öffnung den Kopf hintergreift. Die Öffnung ist dabei derartig geformt, daß der Kupplungsabschnitt während des Transportes nicht ungewollt außer Eingriff mit dem Schraubenkopf kommen kann. Über den mit dem Kupplungsabschnitt verbundenen Griffabschnitt läßt sich der Gegenstand dann bequem halten und transportieren. Nach dem Transport kann der Kupplungsabschnitt in entsprechender Weise wieder von der Schraube getrennt werden. Die Schraube sollte so beschaffen sein, daß sie einen ausreichenden Halt des zu transportierenden Gegenstandes gewährleistet. Bei z.B. Kunststoffrahmen, die keinen Metallkern aufweisen, sollten Schrauben mit einem speziellen Kunststoffgewinde (high-high Gewinde) eingesetzt werden.

Je nach Ausgestaltung der Neuerung kann die Öffnung des Kupplungsabschnittes unterschiedlich beschaffen sein. Grundsätzlich sind dabei zwei unterschiedliche Varianten möglich. In der einen Variante umschließt der Kupplungsabschnitt die Öffnung vollständig, die andere Variante sieht vor, daß die Öffnung ausgehend von einer der seitlichen Kanten des Abschnittes ausgebildet wird. Eine unter die erste Variante fallende Ausgestaltung wird z.B. durch eine Öffnung gebildet, deren Durchmesser in Längsrichtung vorzugsweise kontinuierlich abnimmt. Den geringsten Durchmesser weist die Öffnung dabei im Bereich ihres von dem Griffabschnitt abgewandten Endes auf. Eine so geformte Öffnung kann mit ihrem weiten Bereich über den Schraubenkopf geführt werden. Bei Belastung des Kupplungsabschnittes mit dem Gewicht des zu transportierenden Gegenstandes rutscht die Schraube automatisch in den Bereich mit dem kleineren Durchmesser, wodurch der Schraubenkopf arretiert wird.

Wie oben erwähnt, kann die Öffnung jedoch auch ausgehend von einer der Seitenkanten des Kupplungsabschnittes ausgebildet werden. Ein solcher Kupplungsabschnitt läßt sich dann unterhalb des Schraubenkopfes über die Schraube führen und arretieren. In diesem Fall kann der Durchmesser der Öffnung über die gesamte Länge konstant gehalten werden. Es ist jedoch zu beachten, daß sie in dem Kupplungsabschnitt eine Kante bildet, die zur Lastaufnahme geeignet ist. D.h. der an das geschlossene Ende angrenzende Bereich der Öffnung muß zum Griffabschnitt weisen.

Der Kupplungsabschnitt kann aus Metall oder Kunststoff beschaffen sein. Es ist möglich, ihn starr oder biegsam auszubilden. Für den Fall, daß der Kupplungsabschnitt aus einer Kunststofffolie hergestellt wird, können entsprechende Maßnahmen vorgesehen werden, die ein Ausreißen der Öffnung verhindern. Denkbar ist es z.B., einen entsprechenden Metallring darin vorzusehen.

Bei dem Griffabschnitt kann es sich z.B. um eine einfache herkömmliche Schlaufe aus Kunststoff, Metall oder Naturfasermaterial handeln. Der Durchmesser der Schlaufe wird vorzugsweise so gewählt, daß man sie bequem mit einer Hand erfassen kann. Weiterhin sollte das Schlaufenmaterial eine ausreichende Breite besitzen, so daß ein Einschneiden der Hand beim Transport von schwereren Gegenständen vermieden wird.

Anstelle der Schlaufe kann als Griffabschnitt jedoch auch ein längliches T-förmiges Element aus Metall, Kunststoff oder dergleichen verwendet werden. Der Querbalken des T-Elements bildet das vom Kupplungsabschnitt abgewandte Ende und kann weitgehend starr ausgebildet sein. Der längliche Teil, der den Querbalken mit dem Kupplungsabschnitt verbindet, kann starr oder biegsam bzw. flexibel ausgebildet sein. Die Verbindung des Kupplungsabschnittes mit dem Griffabschnitt kann beliebig ausgeführt werden. Weiterhin ist es jedoch auch denkbar, Kupplungs- und Griffabschnitt einteilig auszubilden.

In einer weiteren Ausgestaltung der Neuerung ist der Griffabschnitt ein längliches, starres Element aus vorzugsweise Metall, das an dem Kupplungsabschnitt angeformt bzw. vorzugsweise einteilig mit diesem ausgebildet ist. In dem Element sind Befestigungsvorrichtungen in Form von z.B. Durchbohrungen vorgesehen, mit denen sich das Element in bzw. an einer Mauer befestigen läßt. Vorzugsweise handelt es sich dabei um einen Maueranker, wie er bei der Verankerung von z.B. Rahmen, insbesondere aus Holz, Verwendung findet.

Damit der Kupplungsabschnitt während des Zusammenwirkens mit dem Schraubenkopf nicht zu viel Spiel hat, sieht eine weitere Ausgestaltung der Neuerung vor, das freie Ende des Kupplungsabschnittes abzukanten. Diese vorzugsweise in Verbindung mit dem oben beschriebenen Maueranker realisierte Ausgestaltung erlaubt es, den Kupplungsabschnitt gegebenenfalls unter Spannung an dem Schraubenkopf zu befestigen.

In einer besonders bevorzugten Ausgestaltung der Neuerung wird eine Tragevorrichtung in Verbindung mit einer speziell geformten Schraube als Set vorgesehen. Die Schraube weist dabei zwischen Kopf und Schaft einen zylindrischen Abschnitt auf, dessen Durchmesser kleiner als der des Kopfes ist. Aufgrund dieser speziellen Konstruktion steht der Schraubenkopf auch bei fest eingeschraubtem Gewinde immer etwas von dem Gegenstand ab. Dadurch wird gleichzeitig ein Hintergreifen des Kopfes mit dem Kupplungsabschnitt der Tragevorrichtung und eine sichere Verankerung der Schraube in dem Gegenstand ermöglicht. Vorzugsweise handelt es sich bei der Schraube um eine Bohrschraube.

Es versteht sich, daß die Schraube an einer Stelle plaziert wird, an der sie bei dem Einsatz als Gegenstand nicht stört, da die Schraube zweckmäßigerweise nicht wieder entfernt wird.

Die Neuerung soll im folgenden anhand von drei Abbildungen näher erläutert werden.

Fig. 1 zeigt eine Ausführungsform der neuerungsgemäßen Tragevorrichtung, und

Fig. 2 zeigt die Befestigung des Kupplungsabschnittes der Tragevorrichtung aus Fig. 1 an einem Gegenstand, wobei der Griffabschnitt der Übersichtlichkeit halber weggelassen ist.

Fig. 3 zeigt eine weitere Ausführungsform der neuerungsgemäßen Tragevorrichtung.

Fig. 4 zeigt eine Schraube, wie sie in Verbindung mit der Tragevorrichtung verwendet werden kann.

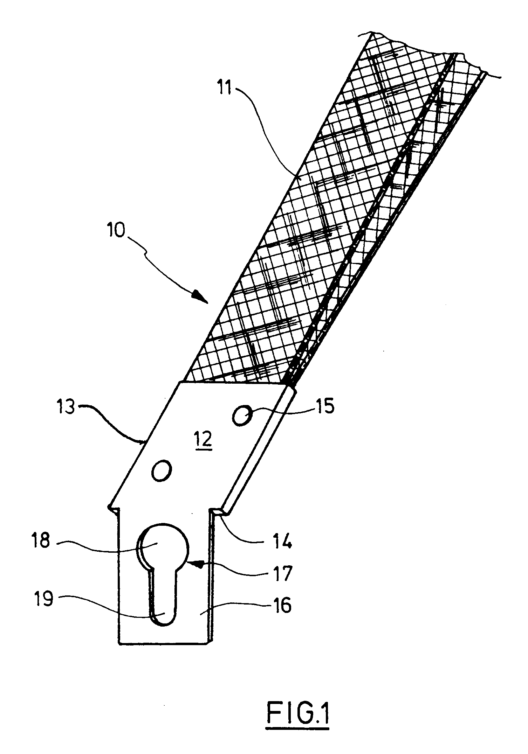

Die in Fig. 1 dargestellte Tragevorrichtung 10 besitzt als Griffabschnitt eine Schlaufe 11 und als Kupplungsabschnitt einen damit verbundenen einteiligen gewinkelten plattenförmigen Teil 12. Die Schlaufe 11 ist nur teilweise dargestellt. Sie entspricht üblichen Schlaufen und bedarf daher keiner weiteren Erläuterung. Der Kupplungsabschnitt 12 besteht vorzugsweise aus Stahlblech oder ähnlichen Materialien. Er weist einen Bereich 13 auf, in dem das Blech so gebogen ist, daß eine nahezu vollständig umschlossene, flache in Längsrichtung verlaufende Tasche 14 entsteht. In diese Tasche wird die Schlaufe 11 eingeführt und mit Nieten 15 befestigt. Ein zweiter Bereich 16 ist gewinkelt zu dem ersten Bereich 13 des Kupplungsabschnittes angeordnet. Er trägt eine Öffnung 17, die einen Bereich 18 mit größerem und einen Bereich 19 mit geringerem Durchmesser aufweist. Mit dem Bereich 18 kann die Öffnung 17 über einen Schraubenkopf geführt werden. Bei Belastung verschiebt sich der Kupplungsabschnitt relativ zu dem Schraubenkopf automatisch nach oben, wodurch der Schraubenkopf in Eingriff mit dem Bereich 19 der Öffnung kommt und festgelegt wird. Der Winkel zwischen den Bereichen 13 und 16 des Kupplungsabschnittes wird dabei so gewählt, daß sich dieser bequem an dem zu transportierenden Gegenstand befestigen läßt. Er sollte jedoch andererseits so beschaffen sein, daß der Abschnitt 13 in etwa zu der Position der Schlaufe während des Transportes ausgerichtet ist. Ein Winkel von ca. 20° hat sich dabei als besonders vorteilhaft erwiesen.

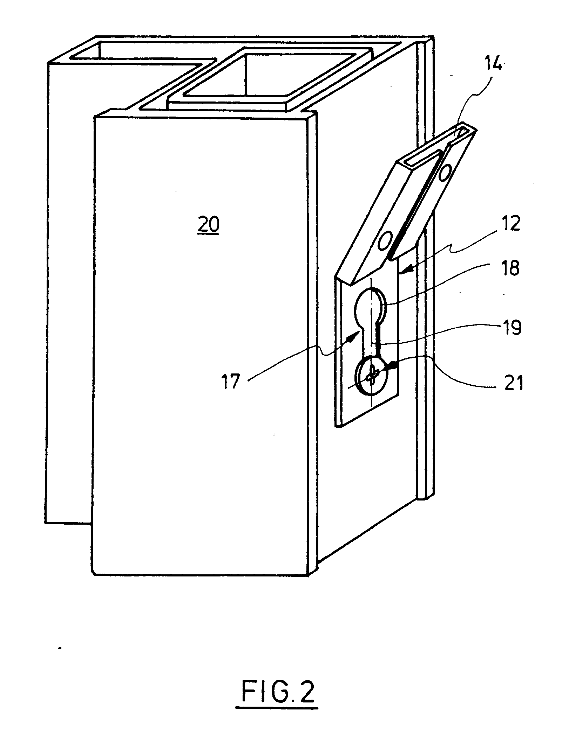

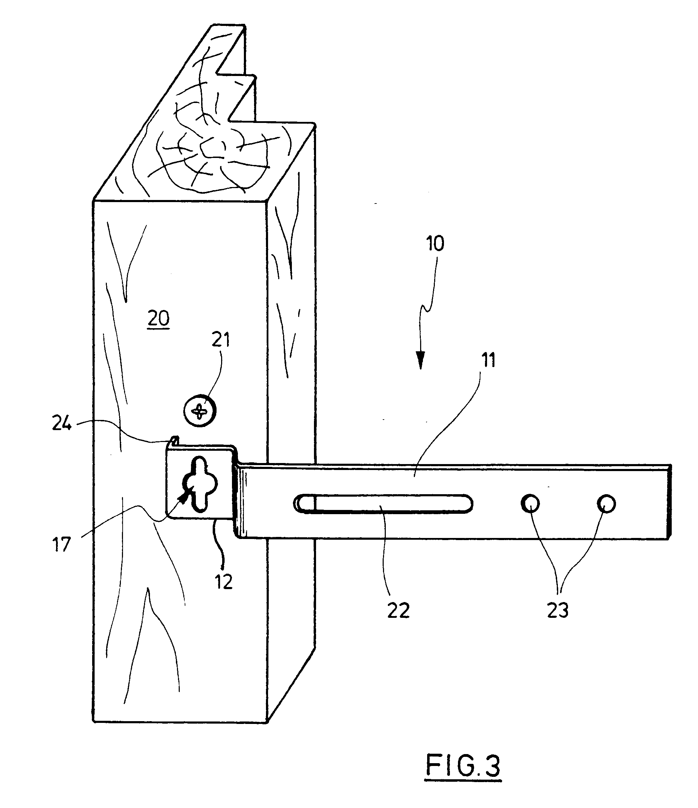

In Fig. 2 ist gezeigt, wie die Tragevorrichtung an einem abschnittsweise dargestellten Fensterrahmen 20 befestigt wird. An dessen Außenseite ist eine Schraube 21 eingeschraubt. Bei der Schraube handelt es sich um eine Bohrschraube, wie sie genauer in Fig. 3 beschrieben wird. In Fig. 2 läßt sich besonders gut das Prinzip erkennen, nach dem der Kupplungsabschnitt mit einer in den Gegenstand eingeschraubten Schraube festgelegt wird. Dargestellt ist der Zustand, der besteht, wenn ein Gegenstand transportiert wird. Der Kupplungsabschnitt wird dann durch die in Fig. 2 nicht dargestellte Griffvorrichtung relativ zu der Schraube nach oben gezogen, wodurch deren Kopf in Eingriff mit dem Bereich 19 der Öffnung kommt, die einen geringeren Durchmesser aufweist. Soll der Kupplungsabschnitt nun von dem Gegenstand entfernt werden, so muß er lediglich relativ zu der Schraube nach unten verschoben werden. Der Schraubenkopf kann dann durch den Bereich 18 der Öffnung außer Eingriff mit dem Kupplungsabschnitt gebracht werden.

Ein weiteres Ausführungsbeispiel der Tragevorrichtung ist in Fig. 3 dargestellt. Hier besteht der Griffabschnitt 11 aus einem langgestreckten, flächigen Element, in dem Durchbohrungen 22, 23 vorgesehen sind. Das Element 11 kann z.B. ein herkömmlicher Maueranker aus Metall sein, der vorzugsweise einteilig mit dem Kupplungsabschnitt 12 ausgebildet wird. Die Durchbohrungen 22, 23 dienen zur Befestigung der Elemente 11 in bzw. an einer Mauer. An dem freien Ende des Kupplungsabschnittes 12 ist weiterhin eine Abkantung 24 vorgesehen. Sie dient dazu, den Kupplungsabschnitt 12 unter Spannung auf dem Rahmenteil 20 zu befestigen, wenn dieser mit seiner Öffnung 17 die Schraube 21 hintergreift.

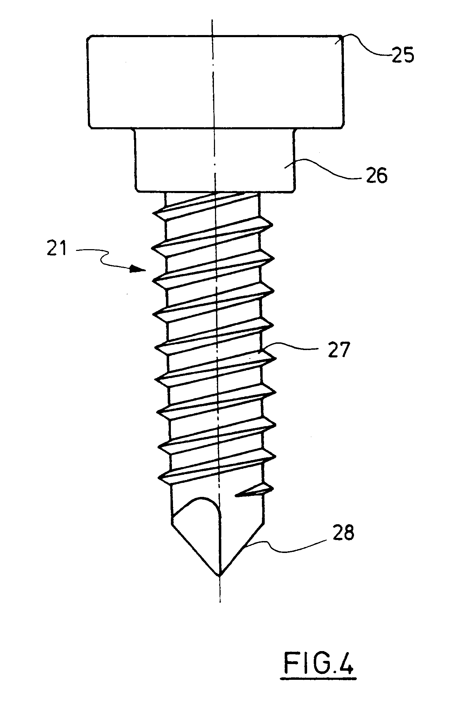

Eine Besonderheit der in Fig. 4 gezeigten Schraube besteht darin, daß sie zwischen Schraubenkopf 25 und ihrem Schraubenschaft 27 einen zylindrischen Abschnitt 26 aufweist. Wie oben bereits ausgeführt, sorgt dieser Abschnitt 26 dafür, daß der Schraubenkopf 25 auch bei fest eingeschraubtem Gewinde einen ausreichenden Abstand zu dem Gegenstand aufweist.

Weiterhin ist das Ende des Schraubenschaftes als Bohrspitze 28 ausgebildet. Die Schraube 25 läßt sich so beliebig in Gegenstände einschrauben, ohne daß vorher ein Gewinde gebohrt werden muß.

**Patentansprüche**

1. Abnehmbare Tragevorrichtung für den Transport von unhandlichen Gegenständen, insbesondere von Profilrahmen für Türen und Fenster, dadurch gekennzeichnet, daß ein Kupplungsabschnitt (12) vorgesehen ist mit einer länglichen Öffnung (17) zwecks Hintergreifen des Kopfes einer mit dem Gegenstand (20) verbundenen Schraube (21) und daß der Kupplungsabschnitt (12) mit einem Griffabschnitt (11) verbunden ist.

2. Tragevorrichtung nach Anspruch 1, dadurch gekennzeichnet, daß Griffabschnitt (11) und Kupplungsabschnitt (12) einteilig ausgebildet sind.

3. Tragevorrichtung nach den Ansprüchen 1 und 2, dadurch gekennzeichnet, daß der Kupplungsabschnitt (12) die Öffnung (17) vollständig umschließt.

4. Tragevorrichtung nach Anspruch 3, dadurch gekennzeichnet, daß der Durchmesser der Öffnung (17) sich in Längsrichtung vorzugsweise kontinuierlich ändert, wobei sich der Bereich mit dem geringsten Durchmesser angrenzend zu dem vom Griffabschnitt abgewandten Ende der Öffnung befindet.

5. Tragevorrichtung nach einem der Ansprüche 1 und 2, dadurch gekennzeichnet, daß die Öffnung ausgehend von einer der Seitenkanten des Kupplungsabschnittes ausgebildet ist, wobei mindestens ein an das geschlossene Ende der Öffnung angrenzender Teilbereich der Öffnung zu dem Griffabschnitt weisend ausgebildet ist.

6. Tragevorrichtung nach einem der Ansprüche 1 bis 6, dadurch gekennzeichnet, daß der Griffabschnitt (11) eine Schlaufe ist.

7. Tragevorrichtung nach einem der Ansprüche 1 bis 7, dadurch gekennzeichnet, daß der Kupplungsabschnitt (12) ein längliches plattenförmiges, entlang seiner Längsachse gewinkeltes Element aus Blech oder dergleichen ist, wobei ein Abschnitt die Öffnung (17) aufweist und der andere zur Verbindung mit dem Griffabschnitt (11) dient.

8. Tragevorrichtung nach den Ansprüchen 1 bis 5, dadurch gekennzeichnet, daß an dem Kupplungsabschnitt ein länglicher starrer Griffabschnitt (11), vorzugsweise aus Metall, angeformt ist, der mit Befestigungsvorrichtungen (22, 23) versehen ist zur Anbringung in bzw. an einer Mauer.

9. Tragevorrichtung nach Anspruch 8, dadurch gekennzeichnet, daß das freie Ende (24) des Kupplungsabschnittes (12) abgekantet ist.

10. Set, bestehend aus einer Tragevorrichtung (10) nach den Ansprüchen 1 bis 7 und einer Schraube (21), dadurch gekennzeichnet, daß zwischen Schraubenkopf (25) und Gewindeschaft (27) ein zylindrischer Abschnitt (26) vorgesehen ist, dessen Durchmesser geringer als der des Schraubenkopfes ist.

11. Set nach Anspruch 8, dadurch gekennzeichnet, daß die Schraube (21) eine Bohrspitze (28) aufweist.

**Claims**

1. A detachable carrier device for transporting bulky articles, particularly profile frames for doors and windows, characterized in that a coupling portion (12) is provided comprising an elongated opening (17) adapted to grip behind the head of a screw bolt (21) connected to the article (20), and that the coupling portion (12) is connected to a gripping portion (11).

2. The carrier device according to claim 1, characterized in that the handling portion (11) and the coupling portion (12) are integrally formed.

3. The carrier device of claim 1 and 2, wherein the coupling-portion completely encompasses the aperture.

4. The carrier device according to claim 3, characterized in that the diameter of the opening (17) preferably continuously varies in its longitudinal direction, with the area having the smallest diameter being positioned adjacent to the end of the opening facing away from the gripping portion.

5. The carrier device according to claim 1 and 2, characterized in that the opening is formed to extend from one of the lateral edges of the coupling portion, at least an area of the opening adjacent to the closed end of the opening being formed facing towards the gripping portion.

6. The carrier device according to one of the claims 1 to 5, characterized in that the gripping portion (11) comprises a loop.

7. The carrier device according to one of the claims 1 to 6, characterized in that the coupling portion (12) comprises an elongated plate-like member of sheet metal or the like which is angular in its longitudinal direction, one portion thereof comprising the opening (17) and the other portion serving for the connection to the gripping portion (11).

8. The carrier device according to one of the claims 1 to 5, characterized in that an elongated rigid gripping portion (11) preferably made of metal is formed with the coupling portion, the gripping portion being provided with fastening means (22, 23) for the attachment in or at a wall, respectively.

9. The carrier device according to claim 8, characterized in that the free end (24) of the coupling portion (12) is deflected.

10. A kit comprising a carrier device (10), according to one of the claims 1 to 7 and screw bolt (21), characterized in that a cylindrical portion (26) is provided between the screw head (25) and a threaded shank (27), the diameter of the cylindrical portion being smaller than that of the screw head.

11. A kit according to claim 10, characterized in that the screw bolt (21) comprises a drilling tip (28).


**Revendications**

1. Dispositif de portage amovible pour le transport de colis encombrants, en particulier de cadres profilés pour portes ou fenêtres, caractérisé en ce qu'un organe d'accouplement (12) est prévu avec une ouverture allongée (17) dans le but de reprendre par derrière la tête d'une vis (21) fixée au colis (20) et en ce que l'organe d'accouplement (12) est relié à un organe de manutention (11).

2. Dispositif de portage suivant la revendication 1, caractérisé en ce que l'organe de manutention (11) et l'organe d'accouplement (12) sont réalisés en une seule pièce.

3. Dispositif de portage suivant la revendication 1 et la revendication 2, caractérisé en ce que l'organe d'accouplement (12) entoure complètement l'ouverture (17).

4. Dispositif de portage suivant la revendication 3, caractérisé en ce que le diamètre de l'ouverture (17) varie, de préférence de façon continue, suivant la direction longitudinale, la zone de plus petit diamètre se trouvant au voisinage de l'extrémité de l'ouverture placée du côté opposé à l'organe de manutention.

5. Dispositif de portage suivant l'une quelconque des revendications 1 et 2, caractérisé en ce que l'ouverture est réalisée en partant d'une des arêtes latérales de l'organe d'accouplement, étant entendu qu'au moins l'une des zones partielles de l'ouverture, celle qui est située au voisinage de l'extrémité fermée de l'ouverture, regarde vers l'organe de manutention.

6. Dispositif de portage suivant l'une quelconque des revendications 1 à 6, caractérisé en ce que l'organe de manutention (11) est une courroie en boucle.

7. Dispositif de portage suivant l'une quelconque des revendications 1 à 7, caractérisé en ce que l'organe d'accouplement (12) est un élément en tôle ou similaire, allongé, en forme de plaque, et formant un angle si on suit son axe longitudinal, étant entendu qu'une partie présente l'ouverture (17) et que l'autre partie sert à la liaison avec l'organe de manutention (11).

8. Dispositif de portage suivant les revendications 1 à 5, caractérisé en ce qu'un organe de manutention rigide allongé (11), de préférence en métal, est adapté à l'organe d'accouplement, et est muni de dispositifs de fixation (22, 23) pour être accroché dans ou sur un mur.

9. Dispositif de portage suivant la revendication 8, caractérisé en ce que l'extrémité libre (24) de l'organe d'accouplement (12) est repliée en formant une arête.

10. Ensemble, constitué d'un dispositif de portage (10) suivant les revendications 1 à 7 et d'une vis (21), caractérisé en ce qu'entre la tête (25) de la vis et sa tige filetée (27), il est prévu une section cylindrique (26), dont le diamètre est plus petit que celui de la tête de vis.

11. Ensemble suivant la revendication 8, caractérisé en ce que la vis (21) présente une pointe autoforeuse (28).

FIG.1

14
20
12
18
19
17
21

FIG.2

FIG.3

FIG.4